# EUROPÄISCHE PATENTSCHRIFT

(11) **EP 1 466 766 B1**
(45) Veröffentlichungstag und Bekanntmachung des Hinweises auf die Patenterteilung: **20.12.2006**
(21) Anmeldenummer: 04100870.7
(22) Anmeldetag: 04.03.2004
(51) Int. Cl.: B60H 1/00

(54) **Integrierter Temperatursensor zur Messung der Innenraumtemperatur, insbesondere in einem Kraftfahrzeug**
Integrated temperature sensor for measuring the interior temperature, especially in a motor vehicle
Capteur de température intégré servant à mesurer la temperature à l'interieur, en particulier dans un véhicule automobile

(30) Priorität: 07.04.2003 DE 10316010
(43) Veröffentlichungstag der Anmeldung: 13.10.2004
(73) Patentinhaber: SIEMENS AKTIENGESELLSCHAFT, 80333 München (DE)
(72) Erfinder: Heimberger, Hans-Dieter, 61440 Oberursel (DE); Santarossa, Bruno, 72227 Egenhausen (DE); Strobel, Henry, 65843 Sulzbach (DE); Werner, Josef, 61389 Dorfweil (DE)

(56) Entgegenhaltungen:
- DE-A1- 3 821 743
- DE-A1- 10 056 693
- DE-A1- 10 056 694
- US-A- 5 695 283
- US-A- 6 155 492

## Beschreibung

Die Erfindung betrifft einen integrierten Temperatursensor zur Messung der Innenraumtemperatur, insbesondere in einem Kraftfahrzeug, sowie eine Anordnung zur Messung der Innenraumtemperatur, dies wird z.B. in der DE 3821743 gezeigt.

Innenraumtemperaturen werden heutzutage nicht nur zur bloßen Wiedergabe auf Anzeigeinstrumenten gemessen, sondern sie dienen auch als Eingangssignale für Klimaanlagen. Zur Temperaturmessung werden im allgemeinen Temperaturfühler eingesetzt, die nach dem Prinzip der Kontaktthermometrie arbeiten, d.h. dass durch direkte thermische Kopplung zwischen dem Temperaturfühler und dem zu messenden Medium die Temperatur des Mediums auf den Fühler übertragen wird. In Abhängigkeit von der Temperatur ändern sich die elektrischen Eigenschaften des Temperaturfühlers, was z.B. als Widerstandsänderung erfassbar ist.

Bei der Temperaturmessung müssen jedoch bestimmte thermische Effekte, wie die Übertragung von Fremdwärme durch Wärmeleitung bzw. Wärmestrahlung auf den Temperaturfühler, berücksichtigt werden. Daneben sind insbesondere in Kraftfahrzeugen weitere Randbedingungen zu beachten. So ist aus ästhetischen Gründen eine möglichst verdeckte Anbringung des Temperaturfühlers erforderlich. Wird dieser jedoch hinter einer Wand bzw. einer Innenraumverkleidung montiert, so hat er keinen direkten thermischen Kontakt zur Innenraumluft mehr. Eine Lösungsmöglichkeit besteht in der Verwendung eines Lüftermotors, welcher die Innenraumluft ansaugt und in Richtung Temperaturfühler befördert. Die mit dem Lüftermotor verbundenen Probleme der Geräuschbeeinträchtigung sowie der Überwachung und der Abhilfe bei Ausfall des Motors werden in heute bekannten Ausführungen durch alternative, unbelüftete Messanordnungen umgangen, bei denen Wärmeleitungselemente zwischen dem Innenraum und dem Temperaturfühler angebracht werden. Die Wärmeleitungselemente sind jedoch im allgemeinen mechanisch mit der Innenraumverkleidung bzw. den Armaturen verbunden und diese weisen bedingt durch die Eigenerwärmung der im Fahrzeug vorhandenen Aggregate sowie zusätzliche Sonneneinstrahlung oft eine höhere Temperatur auf als die Innenraumluft. Durch die mechanische und damit auch thermische Kopplung zwischen den Armaturen und dem Temperaturfühler wird demnach zuviel Wärme zum Temperaturfühler weitergeleitet, so dass eine zu hohe Temperatur gemessen wird. Zusätzlich zu dem Problem der Wärmeleitung, welchem durch thermische Entkopplungsmaßnahmen teilweise begegnet werden kann, ist auch das bereits genannte Phänomen der Wärmestrahlung zu berücksichtigen. Selbst wenn die direkte thermische Kopplung zwischen Armaturen und Temperaturfühler minimiert werden kann, ist eine verfälschende Erwärmung des Temperaturfühlers aufgrund von z.B. direkter Sonneneinstrahlung oder Wärmeabstrahlung elektronischer Geräte auf den Fühler nicht auszuschließen. Allgemein wirft die unterschiedliche Temperaturverteilung im Fahrzeug Probleme auf. So herrscht direkt nach dem Start eines Fahrzeugs häufig sogar eine niedrigere Temperatur im Bereich hinter den Armaturen als im Innenraum, während sich nach längerer Betriebszeit die Temperaturverteilung gerade umkehrt. Um all die störenden Effekte aus dem gemessenen Temperaturwert wieder herausrechnen zu können, wird heutzutage einiges an Zusatzsensorik eingesetzt, wie z.B. ein zweiter Temperaturfühler hinter den Armaturen, der keinerlei Wärmeleitverbindung zum Innenraum hat und damit direkt die Temperatur hinter den Armaturen als Vergleichswert liefert.

Aus der DE 100 56 694 A1 ist eine unbelüftete Anordnung zur Bestimmung von Temperaturen im Innenraum eines Fahrzeugs bekannt. Die Anordnung liefert Eingangssignale für eine Regelung der Temperatur der Zuluft in den Fahrzeuginnenraum, wobei die Eingangssignale ein Innenraumtemperatursignal sowie ein Objekttemperatursignal sind. Das Objekttemperatursignal wird mittels eines Infrarotsensors erzeugt, der die abgegebene Wärmestrahlung eines im Innenraum vorhandenen Objektes, z.B. eines Fahrzeugsitzes, erfasst. Da das Messprinzip des Infrarotsensors, eines Thermopileelementes, auf einer Temperaturdifferenzmessung beruht, muss gleichzeitig ein Temperaturfühler nahe am Infrarotsensor angebracht sein, um einen absoluten Referenzwert zu liefern. Es werden also zwei Messprinzipien genutzt, zum einen die Kontaktthermometrie zur Bestimmung des Referenzwertes und zum anderen die Strahlungsthermometrie zur Bestimmung der Temperaturdifferenz. In der DE 100 56 694 A1 wird der Temperaturfühler durch Anbringung eines Wärmeleitelementes, welches in direktem Kontakt zum Fahrzeuginnenraum steht, gezielt auf die Temperatur des Innenraumes gebracht. Damit liefert der Temperaturfühler neben dem Referenzwert zur Bestimmung der Objekttemperatur gleichzeitig einen Wert für die Innenraumtemperatur. Der Messwert wird jedoch direkt als Innenraumtemperatur interpretiert, ohne eine Korrektur des Signals in Bezug auf eine Erwärmung des Wärmeleitelementes durch Sonneneinstrahlung vorzunehmen. Auf das Problem der Sonneneinstrahlung wird sogar im Gegenteil nur insoweit eingegangen, als dass eine Platzierung der Sensoranordnung in einem Bereich empfohlen wird, der nicht den Sonnenstrahlen ausgesetzt ist. Dies ist u.a. zum Schutz des Thermopileelementes notwendig, da es aufgrund seiner hohen Messempfindlichkeit bei direktem Einfall von Sonnenlicht beschädigt oder zerstört werden könnte.

Aufgabe der vorliegenden Erfindung ist es, einen Sensor sowie eine verbesserte unbelüftete Anordnung zur Messung einer Innenraumtemperatur, insbesondere in einem Kraftfahrzeug, anzugeben, bei denen der Einfluss einer Sonneneinstrahlung auf das Messergebnis berücksichtigt wird.

Die Aufgabe wird durch die Unterbringung eines Temperaturfühlers und eines Infrarotsensors in einem gemeinsamen Gehäuse gelöst, wobei das Gehäuse aus wärmeleitfähigem und als Tageslichtsperrfilter wirkendem Material besteht und als Vollkörper ausgeführt ist, in welchen der Temperaturfühler, der Infrarotsensor sowie ein Trägerelement, auf welchem beide Sensoren gemeinsam angeordnet sind, eingebettet sind. Diese Anordnung dient als integrierter Innenraumtemperatursensor. Über das Gehäuse, welches z.B. aus einem Kunstharz besteht, wird die Temperatur der Innenraumluft direkt in Richtung des Temperaturfühlers weitergeleitet. Werden der Temperaturfühler, der Infrarotsensor, das Trägerelement sowie u.U. weitere benötigte Bauteile in dem Kunstharz vergossen, so erhält man die Vollkörperausführung des Gehäuses. Aufgrund der Gestaltung des Gehäuses als Vollkörper entsteht ein formschlüssiger Kontakt zwischen dem wärmeleitfähigen Material und allen im Inneren eingebetteten Bauteilen. Auf diese Weise treten nahezu keine Wärmeverluste an den Übergangsstellen zwischen dem Gehäuse und dem Temperaturfühler auf, d.h. der Temperaturfühler gibt nahezu exakt die Temperatur der Umgebungsluft des Gehäuses wieder. Gleichzeitig wirkt das Gehäuse als Tageslichtsperrfilter, so dass der Infrarotanteil aus dem auf das Gehäuse einstrahlenden Sonnenlicht herausgefiltert wird und zum Infrarotsensor gelangt. Der Infrarotsensor misst damit die durch das Sonnenlicht hervorgerufene Wärmestrahlung, welche den vom Temperaturfühler ausgegebenen Messwert beeinflusst. Mit dem vom Infrarotsensor gelieferten Signal kann also die vom Temperaturfühler gemessene Temperatur um den verfälschenden Sonnenlichtanteil korrigiert werden. Dies stellt eine Verbesserung gegenüber der Ausführung mit dem Thermopilesensor dar, da der integrierte Temperatursensor an jeder beliebigen Stelle im Fahrzeuginnenraum platziert werden kann ohne vor direktem Sonnenlicht geschützt werden zu müssen. Vorteilhaft sind bei der integrierten Anordnung auch die kleinen äußeren Abmessungen, weshalb der Temperatursensor ohne optisch zu stören im sichtbaren Bereich, z.B. auf dem Bedienteil einer Fahrzeugklimaanlage, angebracht werden kann.

Die Ausführung des gesamten, den Temperaturfühler und den Infrarotsensor umschließenden Gehäuses als Tageslichtsperrfilter ermöglicht die Erfassung eines Sonnenlichteinfalls aus fast allen Raumrichtungen. Da die Infrarotstrahlung des weiteren nicht aus einer Differenz- sondern aus einer Absolutwertmessung ermittelt wird, ist kein zusätzliches Referenzsignal nötig, was die Auswertung der Sensorinformation erleichtert.

Bevorzugt wird der integrierte Temperatursensor in Dickschicht-Hybrid-Technik ausgeführt. Das Trägerelement, auch als Substrat bezeichnet, besteht dabei aus wärmeleitender Keramik, z.B. Aluminiumoxid (Al₂O₃) oder Aluminiumnitrit (AlN). Auf dieses Trägerelement wird der Temperaturfühler, z.B. ein NTCoder PTC-Widerstand, als Dünnschicht aufgedruckt. Der Infrarotsensor ist bevorzugt eine Photodiode, welche als Halbleitersensorchip ausgeführt ist und ebenfalls auf dem Trägerelement befestigt wird, beispielsweise durch Kleben und/oder Verlöten.

In einer speziellen Ausführung sind der Temperaturfühler und der Infrarotsensor nicht auf ein und derselben Seite des Trägerelementes aufgebracht sondern auf einander gegenüberliegenden Seiten. In diesem Fall ist es besonders erforderlich, dass das Trägerelement eine gute Wärmeleitfähigkeit besitzt, damit sichergestellt ist, dass die Wärme der Innenraumluft tatsächlich auch an den Ort des Temperaturfühlers übertragen wird.

Der Temperaturfühler und der Infrarotsensor werden beide jeweils gebonded, d.h. dass ein nur einige Mikrometer dünner Verbindungsdraht, auch Bonddraht genannt, durch z.B. Thermokompressions-, Ultraschall- oder Thermosonicschweißen mit den Bauteilen verbunden wird. Der Bonddraht wiederum wird an elektrische Anschlusselemente angeschweißt, welche die von den Sensoren gelieferten elektrischen Signale an eine Verarbeitungseinheit weiterleiten. Die Anschlusselemente sind im einfachsten Fall Anschlussdrähte, welche jedoch einen deutlich größeren Durchmesser aufweisen als der Bonddraht.

Die Verarbeitungseinheit, z.B. ein Steuergerät einer Fahrzeugklimaanlage, ist üblicherweise hinter einer Abdeckung zum Fahrzeuginnenraum in Verbindung mit einigen anderen elektronischen Geräten und Komponenten untergebracht. Aus diesem Grund lässt sich eine gegenüber dem Innenraum erhöhte Temperatur in diesem Bereich nur schwer vermeiden. Es ist deshalb von großer Wichtigkeit, dass die Anschlusselemente möglichst wenig thermisch leitenden Kontakt zu den Sensorelementen und insbesondere zum Temperaturfühler haben, damit keine Fremdwärme an diese abgegeben werden kann. Unterstützend wirkt dabei zum einen der geringe Durchmesser des Bonddrahtes, der zwar eine elektrisch leitende Verbindung zwischen Anschlusselement und Sensorelement herstellt, der aber aufgrund seiner geringen Kontaktfläche nur wenig Wärme überträgt. Des weiteren verlaufen die Anschlusselemente nicht innerhalb des wärmeleitenden Trägerelementes und sie haben auch sonst keinerlei wärmeleitenden Kontakt zueinander. Damit überhaupt erst wenig Fremdwärme über die Anschlusselemente zu den Sensorelementen hin übertragen werden kann, bestehen die Anschlusselemente bevorzugt aus einem Material mit geringer Wärmeleitfähigkeit, wie z.B. Konstantan. Eine andere Möglichkeit besteht in der Ausführung der Anschlusselemente in Spiral- bzw. Wendelform, ähnlich den Spiral- bzw. Wendelfedern. Auf diese Weise erhält man eine lange Übertragungsstrecke zwischen dem Ort, an dem die Anschlusselemente und die Verarbeitungseinheit verbunden sind, und den Sensorelementen, so dass diese thermisch entkoppelt sind.

Das Trägerelement, auf dem der Temperaturfühler und der Infrarotsensor aufgebracht sind, ist in einer speziellen Ausgestaltung seinerseits auf einer schlecht wärmeleitenden Grundplatte befestigt. Auf diese Weise wird möglichst wenig Wärme von der Rückseite des integrierten Temperatursensors auf den Temperaturfühler übertragen.

Da der integrierte Temperatursensor üblicherweise auf bzw. in einer Öffnung einer an den Innenraum grenzenden Wand, z.B. einer Geräteabdeckung, angebracht ist, weist seine Rückseite zwangsläufig in Richtung erhöhter Temperaturen. Bei der Befestigung des integrierten Temperatursensors muss darauf geachtet werden, dass möglichst keine Wärme von der Wand auf ihn übertragen wird. Dies kann entweder dadurch erreicht werden, dass die Kontaktflächen klein gehalten werden und möglichst viel Luft zwischen Temperatursensor und Wand vorhanden ist, oder dadurch dass eine zusätzliche wärmeisolierende Schicht zwischen integriertem Temperatursensor und Wand angebracht wird.

Die Anbringung des integrierten Temperatursensors an einer Wand zum Innenraum bzw. in einer Öffnung einer solchen Wand erfolgt bevorzugt so, dass der Bereich des Temperatursensors, in dem sich der Temperaturfühler und der Infrarotsensor befinden, vor dieser Wand liegt und in Richtung des Innenraums weist, wobei das Gehäuse des Temperatursensors direkten Kontakt mit der Innenraumluft hat. Durch diese Anordnung kann auf ein zusätzliches Wärmeleitelement zwischen Temperaturfühler und Innenraumluft vollständig verzichtet werden, wie es bei einer Anbringung hinter einer Wand erforderlich wäre.

In einer speziellen Ausführung ist die oben beschriebene Anordnung des integrierten Temperatursensors Bestandteil einer Fahrzeugklimaanlage, d.h. der integrierte Temperatursensor ist auf dem Bedienteil oder einer Abdeckung bzw. in einer Öffnung des Bedienteils oder einer Abdeckung der Klimaanlage befestigt.

Eine Beschreibung einer speziellen Ausgestaltung eines integrierten Temperatursensors und einer Anordnung zur Messung der Innenraumtemperatur, insbesondere in einem Kraftfahrzeug, erfolgt nachfolgend anhand der Zeichnung. Es zeigen
- Fig. 1 eine dreidimensionale Schnitt-Ansicht eines integrierten Temperatursensors,
- Fig. 2 eine Anordnung des integrierten Temperatursensors aus Fig. 1 in der Öffnung einer Wand,
- Fig. 3 eine dreidimensionale Schnitt-Ansicht einer weiteren Ausführung eines integrierten Temperatursensors,
- Fig. 4 eine andere dreidimensionale Schnitt-Ansicht des integrierten Temperatursensors aus Fig. 3.

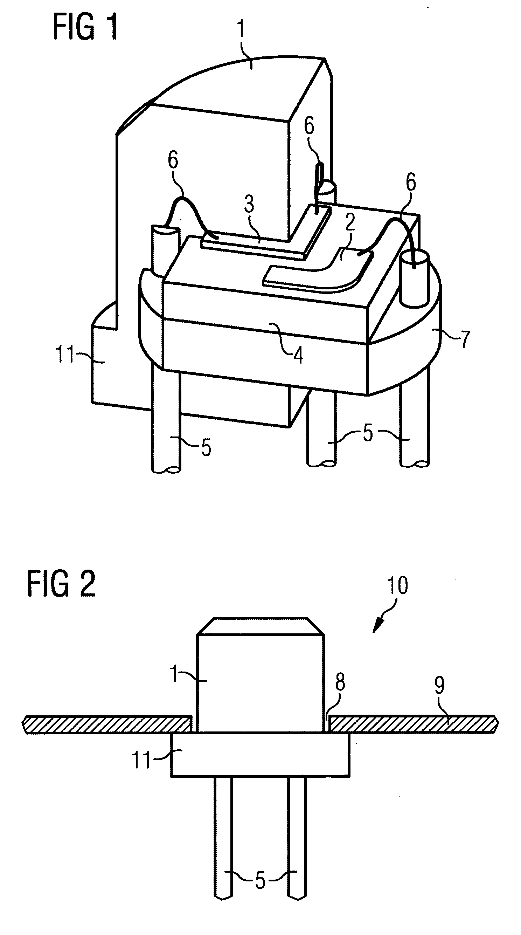

In Fig. 1 ist eine dreidimensionale, geschnittene Ansicht eines integrierten Temperatursensors zu sehen. Das Gehäuse 1 ist als Vollkörper ausgeführt und besteht aus wärmeleitfähigem und als Tageslichtsperrfilter wirkendem Material. Es besitzt in seinem unteren Bereich einen Sockel 11. In dem Gehäuse 1 sind eine Grundplatte 7, ein darauf befestigtes Trägerelement 4 sowie ein Temperaturfühler 2 und ein Infrarotsensor 3 eingebettet. Das Trägerelement 4 stellt ein Substrat aus Keramikmaterial dar und ist sehr gut wärmeleitend. Der Temperaturfühler 2 wurde auf das Trägerelement 4 als Dünnschicht aufgedruckt. Der Infrarotsensor 3 arbeitet als Photodiode und ist in Form eines Sensorchips ausgeführt, welcher auf das Trägerelement 4 aufgeklebt wurde. Der Temperaturfühler 2 und der Infrarotsensor 3 sind mittels Bonddrähten 6 mit Anschlusselementen 5 elektrisch leitend verbunden. Die Anschlusselemente 5 bestehen aus schlecht wärmeleitendem Konstantan und verlaufen außerhalb des Trägerelementes 4 durch die ebenfalls schlecht wärmeleitende Grundplatte 7 hindurch. Die niedrige Wärmeleitfähigkeit der Anschlusselemente 5 und der Grundplatte 7 verhindern, dass Wärme aus Richtung der Anschlusselemente 5 auf den Temperaturfühler 2 übertragen wird. Eine Einkoppelung von das Messergebnis verfälschender Fremdwärme wird außerdem durch den dünnen Querschnitt der Bonddrähte 6 weiter vermindert, so dass nahezu ausschließlich die über die Gehäuseoberseite zum Temperaturfühler 2 weitergeleitete Wärme der Innenraumluft als Temperatur gemessen wird. Das gleichzeitig als Tageslichtsperrfilter wirkende Gehäuse 1 filtert den Infrarotanteil, also die Wärmestrahlung, aus dem in das Gehäuse 1 einfallenden Sonnenlicht heraus. Dieser Infrarotanteil wird vom Infrarotsensor 3 messtechnisch erfasst und über die an den Infrarotsensor 3 angeschlossenen Bonddrähte 6 und Anschlusselemente 5 an eine Verarbeitungseinheit weitergeleitet. Die Verarbeitungseinheit kann z.B. das Steuergerät einer Fahrzeugklimaanlage sein, wo eine dem Messwert der Wärmestrahlung entsprechende, am Temperaturfühler 2 zu erwartende Temperaturerhöhung berechnet wird. Das Temperatursignal des Temperaturfühlers 2 wird um den der Sonneneinstrahlung entsprechenden Wert der Temperaturerhöhung korrigiert, so dass als Ergebnis die tatsächliche Innenraumtemperatur vorliegt.

In Fig. 2 ist eine Anordnung zur Messung einer Innenraumtemperatur abgebildet, wobei der aus Fig. 1 bekannte integrierte Temperatursensor in der Öffnung 8 einer an einen Innenraum, insbesondere einen Fahrzeuginnenraum, angrenzenden Wand 9 angeordnet ist. Der integrierte Temperatursensor ist ungeschnitten dargestellt. Zu erkennen sind zwei Anschlusselemente 5, die nur verkürzt dargestellt sind. Die Anschlusselemente 5 ragen hinter der Wand 9 aus dem Gehäuse 1 heraus und führen von dort zu einer Verarbeitungseinheit weiter. Der größte Teil des Gehäuses 1 ragt durch die Öffnung 8 hindurch, so dass es von möglichst viel Innenraumluft 10 umgeben ist. Es ist insbesondere wichtig, dass der Temperaturfühler 2 über das Gehäuse 1 in möglichst direktem Kontakt zur Innenraumluft steht, was in dieser Anordnung erreicht ist, da sich das Trägerelement 4 mit dem aufgedruckten Temperaturfühler 2 deutlich oberhalb des Sockels 11 befindet (s. Fig. 1). Der integrierte Temperatursensor ist an dem Sockel 11 mit der Wand 9 mechanisch verbunden. Der Sockel 11 ist relativ schmal ausgeführt, um eine möglichst geringe thermische Kopplung zur Wand 9 zu erreichen. In einer anderen Ausführung kann zwischen Sockel 11 und Wand 9 eine zusätzliche, wärmeisolierende Zwischenschicht angebracht sein, die eine Wärmeübertragung von der Wand 9 auf das Gehäuse 1 weiter reduziert.

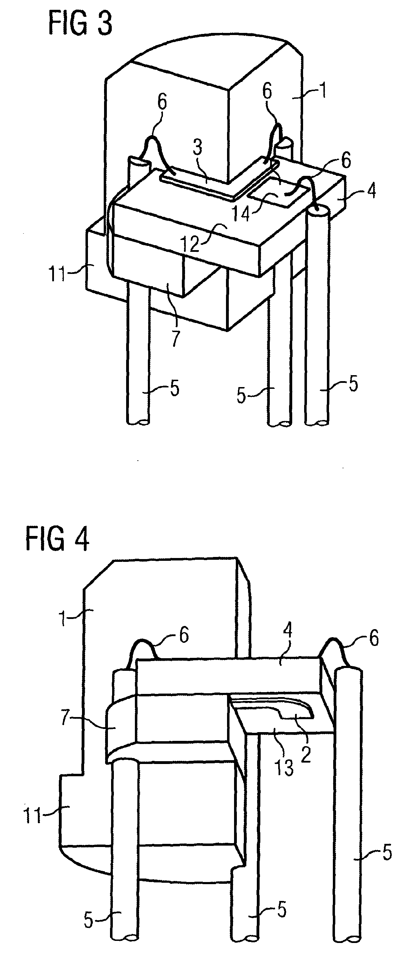

In den Fig. 3 und 4 ist eine Ausführungsform eines integrierten Temperatursensors abgebildet, bei welcher der Infrarotsensor 3 und der Temperaturfühler 2 auf einander gegenüberliegenden Seiten des Trägerelementes 4 aufgebracht sind. Wie aus Fig. 3 hervorgeht, befindet sich der Infrarotsensor 3 auf der Oberseite 12 des Trägerelementes 4, so dass die aus dieser Richtung eintreffende Wärmestrahlung erfasst werden kann. In Fig. 4 ist die Unterseite 13 des Trägerelementes 4 zu erkennen, auf der der Temperaturfühler 2 aufgedruckt ist. Zur Herstellung einer Bonddrahtverbindung auf der Oberseite 12 wurde eine Durchkontaktierung zum Temperaturfühler 2 in das Trägerelement 4 eingebracht und auf der Oberseite 12 mit einem Bondpad 14 versehen. Die übrigen Elemente des integrierten Temperatursensors aus den Fig. 3 und 4 entsprechen den im Zusammenhang mit Fig. 1 beschriebenen Merkmalen.

## Patentansprüche

1. Integrierter Temperatursensor zur Messung einer Innenraumtemperatur, insbesondere in einem Kraftfahrzeug, mit einem Gehäuse (1) aus wärmeleitfähigem und als Tageslichtsperrfilter wirkendem Material und mit einem Temperaturfühler (2) und einem Infrarotsensor (3), welche auf einem gemeinsamen Trägerelement (4) angeordnet sind, wobei das Gehäuse (1) als Vollkörper ausgeführt ist und der Temperaturfühler (2), der Infrarotsensor (3) und das Trägerelement (4) in das Gehäuse (1) eingebettet sind.

2. Integrierter Temperatursensor nach Anspruch 1, **dadurch gekennzeichnet, dass** das Trägerelement (4) aus wärmeleitendem Material, insbesondere Keramik, besteht.

3. Integrierter Temperatursensor nach einem der vorhergehenden Ansprüche, **dadurch gekennzeichnet, dass** der Temperaturfühler (2) als Dünnschicht auf das Trägerelement (4) aufgedruckt ist.

4. Integrierter Temperatursensor nach einem der vorhergehenden Ansprüche, **dadurch gekennzeichnet, dass** der Infrarotsensor (3) als Halbleiter-Sensorchip ausgeführt ist.

5. Integrierter Temperatursensor nach einem der vorhergehenden Ansprüche, **dadurch gekennzeichnet, dass** der Infrarotsensor (3) und der Temperaturfühler (2) auf unterschiedlichen Seiten des Trägerelementes (4) aufgebracht sind.

6. Integrierter Temperatursensor nach einem der vorhergehenden Ansprüche, **dadurch gekennzeichnet, dass** der Infrarotsensor (3) und der Temperaturfühler (2) mit Anschlusskontaktelementen (5) jeweils über Bonddraht (6) verbunden sind.

7. Integrierter Temperatursensor nach einem der vorhergehenden Ansprüche, **dadurch gekennzeichnet, dass** die Anschlusskontaktelemente (5) thermisch entkoppelt voneinander, also räumlich getrennt sowie außerhalb des Trägerelementes (4), verlaufen.

8. Integrierter Temperatursensor nach einem der vorhergehenden Ansprüche, **dadurch gekennzeichnet, dass** die Anschlusskontaktelemente (5) aus einem Material mit geringer Wärmeleitfähigkeit bestehen, insbesondere aus Konstantan.

9. Integrierter Temperatursensor nach einem der vorhergehenden Ansprüche, **dadurch gekennzeichnet, dass** die Anschlusskontaktelemente (5) in Spiral- bzw. Wendelform ausgeführt sind.

10. Integrierter Temperatursensor nach einem der vorhergehenden Ansprüche, **dadurch gekennzeichnet, dass** das Trägerelement (4) auf einer Grundplatte (7) aufgebracht ist, welche aus einem Material mit geringer Wärmeleitfähigkeit besteht.

11. Anordnung zur Messung einer Innenraumtemperatur, insbesondere in einem Kraftfahrzeug, mit einem integrierten Temperatursensor, welcher mit einem als Vollkörper ausgeführten Gehäuse (1) aus wärmeleitfähigem und als Tageslichtsperrfilter wirkendem Material versehen ist und einen Temperaturfühler (2) und einen Infrarotsensor (3) beinhaltet, die auf einem gemeinsamen Trägerelement (4) angeordnet und zusammen mit dem Trägerelement (4) in das Gehäuse (1) eingebettet sind, wobei der integrierte Temperatursensor an bzw. in einer Öffnung (8) einer an einen Innenraum angrenzenden Wand (9) befestigt ist und das Gehäuse (1) des Temperatursensors in direktem Kontakt zur Innenraumluft (10) steht.

12. Anordnung zur Messung der Innenraumtemperatur nach Anspruch 11, **dadurch gekennzeichnet, dass** zwischen dem integrierten Temperatursensor und der an den Innenraum angrenzenden Wand (9) eine thermisch isolierende Schicht angebracht ist.

13. Anordnung zur Messung der Innenraumtemperatur nach einem der Ansprüche 11 oder 12, **dadurch gekennzeichnet, dass** die Anordnung Bestandteil einer Fahrzeugklimaanlage ist.

## Claims

1. Integrated temperature sensor for measuring an interior temperature, particularly in a motor vehicle, having a housing (1) made of a material which is thermally conductive and acts as a daylight-blocking filter, and having a temperature detector (2) and an infrared sensor (3) which are arranged on a common support element (4), the housing (1) being designed as a solid body and the temperature detector (2), the infrared sensor (3) and the support element (4) being embedded in the housing (1).

2. Integrated temperature sensor according to Claim 1, **characterized in that** the support element (4) consists of a thermally conducting material, in particular ceramic.

3. Integrated temperature sensor according to one of the preceding claims, **characterized in that** the temperature detector (2) is printed as a thin film onto the support element (4).

4. Integrated temperature sensor according to one of the preceding claims, **characterized in that** the infrared sensor (3) is designed as a semiconductor sensor chip.

5. Integrated temperature sensor according to one of the preceding claims, **characterized in that** the infrared sensor (3) and the temperature detector (2) are applied on different sides of the support element (4).

6. Integrated temperature sensor according to one of the preceding claims, **characterized in that** the infrared sensor (3) and the temperature detector (2) are respectively connected to terminal contact elements (5) via bonding wire (6) .

7. Integrated temperature sensor according to one of the preceding claims, **characterized in that** the terminal contact elements (5) extend in such a way that they are thermally decoupled from one another, i.e. spatially separated and outside the support element (4).

8. Integrated temperature sensor according to one of the preceding claims, **characterized in that** the terminal contact elements (5) consist of the material having a low thermal conductivity, in particular constantan.

9. Integrated temperature sensor according to one of the preceding claims, **characterized in that** the terminal contact elements (5) are designed in the form of a spiral or coil.

10. Integrated temperature sensor according to one of the preceding claims, **characterized in that** the support element (4) is applied on a base plate (7), which consists of a material having a low thermal conductivity.

11. Arrangement for measuring an interior temperature, particularly in a motor vehicle, having an integrated temperature sensor which is provided with a housing (1) designed as a solid body, made of a material which is thermally conductive and acts as a daylight-blocking filter, and contains a temperature detector (2) and an infrared sensor (3) which are arranged on a common support element (4) and together with the support element (4) are embedded in the housing (1), the integrated temperature sensor being fastened on or in an opening (8) of a wall (9) adjacent to an interior space and the housing (1) of the temperature sensor being in direct contact with the interior air (10).

12. Arrangement for measuring interior temperature according to Claim 11, **characterized in that** a thermally insulating layer is applied between the integrated temperature sensor and the wall (9) adjacent to the interior space.

13. Arrangement for measuring interior temperature according to one of Claims 11 and 12, **characterized in that** the arrangement is a component of a vehicle air-conditioning system.

## Revendications

1. Capteur de température intégré permettant de mesurer une température intérieure, notamment dans un véhicule automobile, comportant un boîtier (1) en matière à bonne conduction thermique agissant comme filtre bloquant la lumière du jour et un capteur infrarouge (3), qui sont disposés sur un élément support (4) commun, où le boîtier (1) est exécuté comme corps plein et où la sonde de température (2), le capteur infrarouge (3) et l'élément support (4) sont intégrés dans le boîtier (1).

2. Capteur de température intégré selon la revendication 1, **caractérisé par le fait que** l'élément support (4) est en matière à bonne conduction thermique, notamment en céramique.

3. Capteur de température intégré selon l'une des revendications précédentes, **caractérisé par le fait que** la sonde de température (2) est imprimée comme couche mince sur l'élément support (4).

4. Capteur de température intégré selon l'une des revendications précédentes, **caractérisé par le fait que** le capteur infrarouge (3) est exécuté comme puce capteur à semi-conducteur.

5. Capteur de température intégré selon l'une des revendications précédentes, **caractérisé par le fait que** le capteur infrarouge (3) et la sonde de température (2) sont mis en place sur des faces différentes de l'élément support (4).

6. Capteur de température intégré selon l'une des revendications précédentes, **caractérisé par le fait que** le capteur infrarouge (3) et la sonde de température (2) sont chacun reliés à des organes de raccordement (5) par l'intermédiaire de fil à bonder (6).

7. Capteur de température intégré selon l'une des revendications précédentes, **caractérisé par le fait que** les organes de raccordement (5) sont découplés thermiquement l'un de l'autre, donc séparés dans l'espace, et se trouvent à l'extérieur de l'élément support (4).

8. Capteur de température intégré selon l'une des revendications précédentes, **caractérisé par le fait que** les organes de raccordement (5) sont en matière ayant une faible conductibilité thermique, notamment en constantan.

9. Capteur de température intégré selon l'une des revendications précédentes, **caractérisé par le fait que** les organes de raccordement (5) sont réalisés avec une forme en spirale.

10. Capteur de température intégré selon l'une des revendications précédentes, **caractérisé par le fait que** l'élément support (4) est monté sur une plaque de base (7), qui est en matière ayant une faible conductibilité thermique.

11. Dispositif permettant de mesurer une température intérieure, notamment dans un véhicule automobile, comportant un capteur de température intégré, doté d'un boîtier (1) réalisé comme corps plein en matière à bonne conduction thermique agissant comme filtre bloquant la lumière du jour, et renfermant une sonde de température (2) et un capteur infrarouge (3), qui sont disposés sur un élément support (4) commun et intégrés ensemble avec l'élément support commun (4) dans le boîtier (1), le capteur de température intégré étant fixé sur ou dans une ouverture (8) d'une paroi (9) limitant un espace intérieur et le boîtier (1) du capteur de température étant en contact direct avec l'air de l'espace intérieur (10).

12. Dispositif permettant de mesurer la température intérieure selon la revendication 11, **caractérisé par le fait qu'**une couche d'isolation thermique est placée entre le capteur de température intégré et la paroi (9) limitant l'espace intérieur.

13. Dispositif permettant de mesurer la température intérieure selon l'une des revendications 11 ou 12, **caractérisé par le fait que** le dispositif fait partie intégrante d'un système de climatisation d'un véhicule.
